# EUROPEAN PATENT SPECIFICATION

(11) **EP 3 589 824 B1**
(45) Date of publication and mention of the grant of the patent: **07.04.2021**
(21) Application number: 18713336.8
(22) Date of filing: 26.02.2018
(51) Int. Cl.: F01N 3/08, C01B 21/20

(54) **ELECTRO-PHYSICAL APPARATUS FOR THE ACTIVATION OF NITROGEN PERFORMING CONVERSION OF NITRIC OXIDE CONTAINED IN THE EXHAUST GAS OF AN INTERNAL COMBUSTION ENGINE**
ELEKTROPHYSIKALISCHE VORRICHTUNG ZUR AKTIVIERUNG VON STICKSTOFF ZUR DURCHFÜHRUNG DER UMWANDLUNG VON IM ABGAS EINER BRENNKRAFTMASCHINE ENTHALTENEM STICKSTOFFMONOXID
APPAREIL ÉLECTRO-PHYSIQUE POUR L'ACTIVATION D'AZOTE PAR CONVERSION DE L'OXYDE NITRIQUE CONTENU DANS LES GAZ D'ÉCHAPPEMENT D'UN MOTEUR À COMBUSTION INTERNE

(30) Priority: 27.02.2017 GB 201703118
(43) Date of publication of application: 08.01.2020
(73) Proprietor: Tulino, Rosario Rocco, London SW6 1SX (GB); Tulino Research & Partners Ltd., Stratford-upon-Avon, Warwickshire CV37 6AH (GB)
(72) Inventor: TULINO, Rosario, Rocco, London SW6 1SX (GB)
(86) International application number: PCT/IB2018/000164
(87) International publication number: WO 2018/154379

(56) References cited:
- EP-A1- 1 683 565
- FR-A1- 2 863 446

## Description

Among the pollutants present in the emissions of engines at internal combustion, the nitrogen oxides (mix of NO and NO₂), generally known as NOx, represent an extremely worrying factor for both the intrinsic toxicity of the mixture and the difficulty in removing them.

The latest restrictive regulations on the maximum amount of NOx in the exhaust, pose additional challenges to vehicle manufacturers since the usual devices currently used do not guarantee so limited values and especially do not have the ability to maintain tight parameters in run time.

FR 2863446 A1 discloses a device for treating internal combustion engine exhaust gases with plasma.

To solve the problems of the different systems currently used, the attention has been focused on a technological solution articulated in a serial-phases treatment.

The first phase will be carried out by means of a special device, which is the subject of this invention, which performs the conversion of nitric oxide NO to nitrogen dioxide NO₂.

Such conversion allows an easier and safer interception during further treatment stages, which may employ catalytic converters and systems with more ability effectiveness in NO₂ sequestering.

The apparatus, subject of this invention which is defined in appended claims 1-8, operates electro-physically using only single-phase alternating currents (A.C.) at high frequency and voltage.

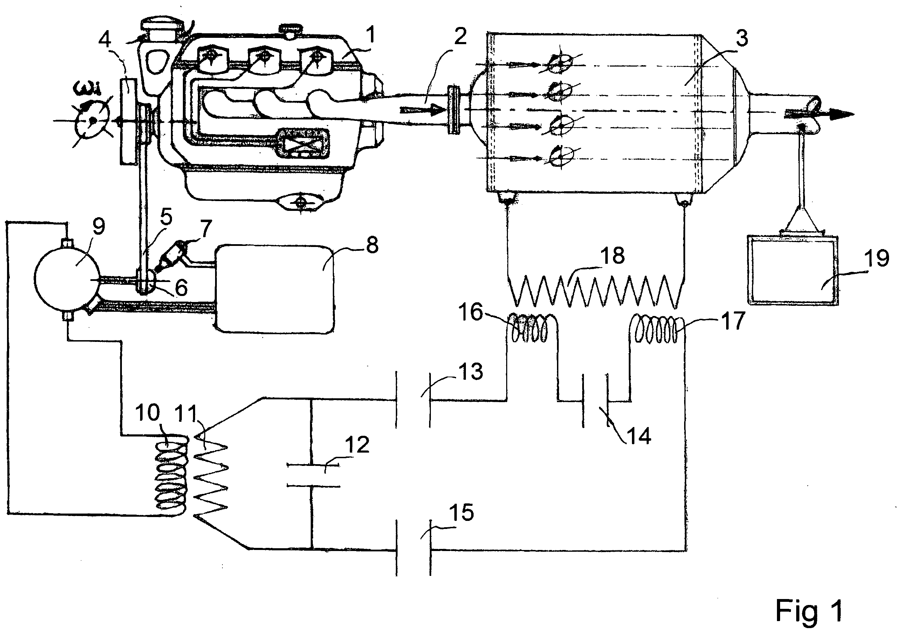

**Figure 1** displays the single-phase alternating current generator (ref. 9) that is driven by pulley (ref. 6) through transmission belt (ref. 5) controlled by flywheel (ref. 4).

The instant position speed detector (ref. 7) sends data to the position control system (ref. 8). Greater the rotation speed of the engine at internal combustion (ref. 1), greater is the volume of exhaust gases emitted through the conduit (ref. 2). Having to process a flow rate growing with the number of revolutions (R.P.M.) of the engine at internal combustion (ref. 1), it will necessary to have growing values of single-phase alternating currents for the circuits powered by single-phase alternating current generator (ref. 9).

The single-phase alternating current generator (ref. 9) is a multipolar type at high frequency and the single-phase alternating currents that it will generate will be proportional to the number of revolutions (R.P.M.), condition that allows the satisfaction of the devices working at different of revolutions (R.P.M.) of the engine at internal combustion (ref. 1).

The single-phase alternating current generator (ref. 9) supply the primary inductive circuit (ref. 10), that is connected to the secondary circuit (ref. 11). The ratio between inductances (ref. 10 and ref. 11) chokes, determines a high rise of voltage at the capacitor (ref. 12) terminals. The capacitors (ref. 13, ref. 14 and ref. 15) are connected to the inductances (ref. 16 and ref. 17) that constitute the primary inductance of high frequency resonant circuit.

The inductance (ref. 18) connected with the inductances (ref. 16 and ref. 17) supply a high voltage at high frequency to the terminal of the apparatus (ref. 3) subject of this invention.

The apparatus (ref. 3) subject of this invention supplied with single-phase alternating current at frequencies higher than 100 kHz and voltages higher than 20kV is capable of making a significant transformation of the molecular nitrogen included in the engine (ref. 1) exhausts to nitrogen N (atomic number 7) at active status.

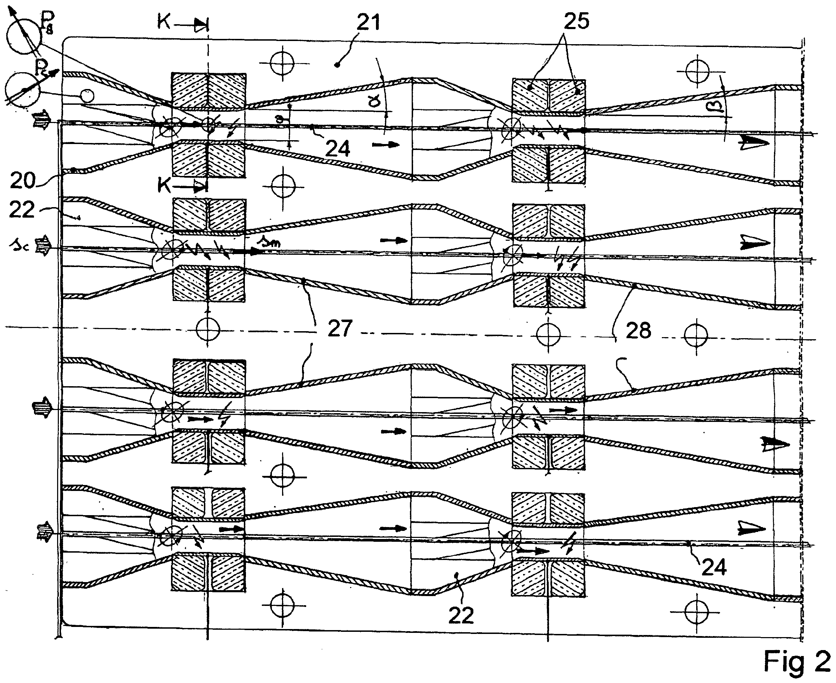

**Figure 2** displays the section of the apparatus (ref. 3 of **Fig. 1**) subject of this invention that is composed by two symmetrical cases (ref. 21); the latter acting as supports and insulation for the crossing metallic ducts.

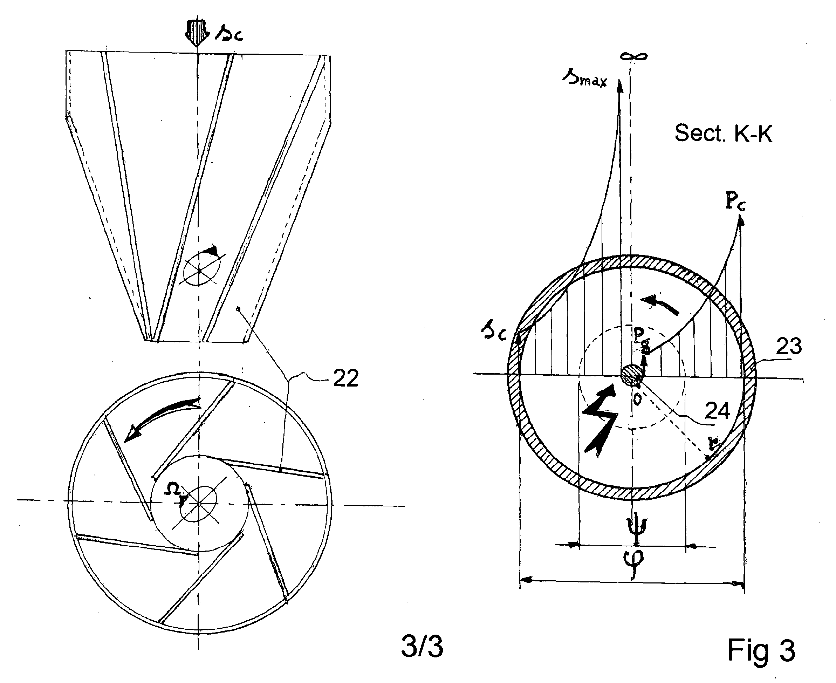

The exhausts coming out from manifold (ref. 2 of **Fig. 1**) are subdivided into multiple parallel metallic ducts (i.e. four as the ones shown in **Fig. 2**). Each metallic duct (ref. 20 of **Fig. 2**) has the first segment with convergent conical shape followed by straight ferromagnetic tubes (ref. 23 of **Fig. 3**) surrounded by high intensity magnetic rings (ref. 25 of **Fig. 2**). The second segment of each metallic duct (ref. 20 of **Fig. 2**) has a divergent conical shape with angle **α** (ref. 27 of **Fig. 2**) that slows down the flow of crossing exhausts and raises the pressure before they merge into the convergent conical shape of the terminal part of the second segment of each metallic duct (ref. 20 of **Fig. 2**). Also, the second segment is followed by straight ferromagnetic tubes (ref. 23 of **Fig. 3**) surrounded by high intensity magnetic rings (ref. 25 of **Fig. 2**). The final segment of each metallic duct (ref. 20 of **Fig. 2**) has a divergent conical shape with angle **β** (ref. 28 of **Fig. 2**) lesser than angle **α** (ref. 27 of **Fig. 2**) to allow a further pressure increase at the end of each metallic duct (ref. 20 of **Fig. 2**).

The central axis of each metallic duct (ref. 20 of **Fig. 2**) is crossed by electrical wire (ref. 24 of **Fig. 2**) connected to the terminals of high frequency and high voltage circuit (ref. 18 of **Fig. 1**). Around the electrical wire (ref. 24 of **Fig. 2**), supplied with single-phase alternating current at frequencies higher than 100 kHz and voltages higher than 20kV, inside the two sections of straight ferromagnetic tubes (ref. 23 of **Fig. 3**) surrounded by high intensity magnetic rings (ref. 25 of **Fig. 2**), it is generated a rotating electric discharge. Under such conditions, in the two sections of straight ferromagnetic tubes (ref. 23 of **Fig. 3**) surrounded by high intensity magnetic rings (ref. 25 of **Fig. 2**) occurs the ionization of the molecular nitrogen included in the engine exhausts transforming it in nitrogen N (atomic number 7) at active status.

**Figure 3** displays in details the device (ref. 22 of **Fig. 2** and **Fig. 3**) that convert the exhausts flow from laminar to a turbulent through a rotating whirling motion **Ω**. Such device is placed inside both the two sections of straight ferromagnetic tubes (ref. 23 of **Fig. 3**) surrounded by high intensity magnetic rings (ref. 25 of **Fig. 2**).

The electrical wire (ref. 24 of **Fig. 2**) is in the center of the two sections of straight ferromagnetic tubes (ref. 23 of **Fig. 3**) surrounded by high intensity magnetic rings (ref. 25 of **Fig. 2**). In that area a condition of low pressure suitable for the activation of molecular nitrogen at optimal physical conditions (low pressure - high voltage - high frequency -strong magnetic field) occurs.

The active molecular nitrogen N*, generated by the electrical discharges in the second section of straight ferromagnetic tubes (ref. 23 of **Fig. 3**) surrounded by high intensity magnetic rings (ref. 25 of **Fig. 2**), reacts with the nitric oxide NO that is inside the engine exhausts transforming it to nitrogen dioxide NO₂ as per formula:

**N*** + **2NO** →**NO₂+N₂**

The mix NO₂, N₂ is collected in the outlet manifold; inside the manifold is installed a measuring sensor connected to a plug (ref. 19 of **Fig. 1**) placed on the outer surface of the same manifold. To such plug it is possible to connect an instrument to measure the percentage of NO₂ and N₂.

With the apparatus (ref. 3 of **Fig. 1**) subject of this invention, we obtain the conversion of nitric oxide NO to nitrogen dioxide NO₂.

For making the catch of nitrogen oxides, generally known as NOx, from exhausts it appears easier to catch the nitrogen dioxide NO₂, consequently the apparatus of this invention has a convenient application as first stage of a treatment of integral catch of nitrogen oxides, generally known as NOx, both with catalytic systems or absorption on chemical solutions.

## Claims

1. Electro-physical apparatus working at high frequency in a high voltage circuit (ref. 3 of **Fig. 1**) and having the ability to achieve an ionization and activation of molecular nitrogen to obtain nitrogen N* which reacts selectively with nitric oxide NO that is inside the engine exhausts, transforming it to nitrogen dioxide NO₂ as per formula:
**N* + 2NO ---> NO₂ + N₂**
the apparatus comprising a ceramic insulation body (ref. 21 of **Fig. 2**), inside which multiple parallel metallic ducts (ref. 20 of **Fig. 2)** are placed: within each duct an electrical wire is placed (ref. 24 of **Fig. 2**); each parallel metallic duct has two segments consisting of straight ferromagnetic tubes (ref. 23 of **Fig. 3**) surrounded by magnetic rings (ref. 25 of **Fig. 2**); upstream of each straight segment is a convergent conical shaped segment; in each convergent conical shape segments (ref. 27 and ref. 28 of **Fig. 2**) of metallic ducts, a device (ref. 22 of **Fig. 2** and **Fig. 3)** that converts the exhausts flow from laminar to a turbulent through a rotating whirling motion **Ω**, is placed.

2. Electro-physical apparatus **as claimed in claim 1** which comprises an inductive capacitive circuit resonant at high frequency with increasing values from the first stage of mutual inductance to the second stage of mutual inductance to power the apparatus.

3. Electro-physical apparatus **as claimed in claim 2 characterized by** the adoption of a single-phase multipolar alternating current generator (ref. 9 of **Fig. 1**) with variable rotation speed between 800 and 5000 RPM to power the inductive capacitive circuit.

4. Electro-physical apparatus **as claimed in claim 3** which comprises a position control system (ref. 8 of **Fig. 1**) that measures, controls and manages in synchronism with the generator and continually varies the excitation current in function of rotating speed.

5. Electro-physical apparatus **as claimed in claim 3** where the operational value of frequency of the current generator is in the range from 10 kHz to 1000 KHz, but most preferably between 80 kHz and 100KHz.

6. Electro-physical apparatus **as claimed in claim 2** where the value of the circuit output voltage is between the 15KV and 50KV, but most preferably between 20 KV and 30 KV.

7. Electro-physical apparatus **as claimed in claim 1** where the body is composed by two symmetrical cases (ref. 21 of **Fig. 2**) acting as supports and insulation for the crossing metallic ducts (ref. 20 of **Fig. 2**).

8. Electro-physical apparatus **as claimed in claim 1 characterized by** multiple parallel metallic ducts (ref. 20 of **Fig. 2)** at variable shape along their length according to the sequence convergent - straight - divergent - convergent - straight - divergent.

## Patentansprüche

1. **Elektrophysikalisches** Gerät, das mit hoher Frequenz in einem Hochspannungskreis arbeitet (Ref. 3 von **Fig. 1**) und die Fähigkeit hat, eine Ionisierung und Aktivierung von molekularem Stickstoff zu erreichen, um Stickstoff N* zu erhalten, der selektiv mit Stickoxid NO reagiert, das sich in den Motorabgasen befindet, und es gemäß der Formel in Stickstoffdioxid NO₂ umwandelt, laut der Formel:
**N* + 2NO → NO₂ + N₂,**
wobei das Gerät einen keramischen Isolationskörper (Ref. 21 von **Fig. 2**) umfasst, in dem mehrere parallele Metallkanäle (Ref. 20 von **Fig. 2)** angeordnet sind: innerhalb jedes Kanals ist ein elektrischer Draht angeordnet (Ref. 24 von **Fig. 2**); jeder parallele Metallkanal zwei Segmente hat, die aus geraden ferromagnetischen Rohren bestehen (Ref. 23 von **Fig. 3**), die von Magnetringen (Ref. 25 von **Fig. 2**) umgeben sind; stromaufwärts von jedem geraden Segment befindet sich ein konvergentes konisch geformtes Segment; in jedem konvergenten konischen Formsegment (Ref. 27 und Ref. 28 von **Fig. 2**) von Metallkanälen, ist eine Vorrichtung (Ref. 22 von **Fig. 2** und **Fig.**3) angeordnet, die den Abgasstrom durch eine rotierende Wirbelbewegung **Ω von laminar in turbulent umwandelt.**

2. Elektrophysikalisches Gerät **nach Anspruch 1,** das einen induktiv-kapazitiven Schaltkreis umfasst, der bei hoher Frequenz mit ansteigenden Werten von der ersten Stufe der gegenseitigen Induktivität zur zweiten Stufe der gegenseitigen Induktivität resonant ist, um das Gerät zu versorgen.

3. Elektrophysikalisches Gerät **nach Anspruch 2, gekennzeichnet durch** die Verwendung eines einphasigen multipolaren Wechselstromgenerators (Ref. 9 von **Fig. 1**) mit variabler Drehzahl zwischen 800 und 5000 U/min zur Versorgung der induktiven kapazitiven Schaltung.

4. Elektrophysikalisches Gerät **gemäß Anspruch 3** das ein Lageregelungssystem umfasst (Ref. **Fig. 8),** das synchron mit dem Generator misst, steuert und verwaltet und den Erregerstrom in Abhängigkeit von der Drehzahl kontinuierlich variiert.

5. Elektrophysikalische Vorrichtung **gemäß Anspruch 3,** wobei der Betriebswert der Frequenz des Stromgenerators im Bereich von 10 kHz bis 1000 kHz liegt, am meisten bevorzugt jedoch zwischen 80 kHz und 100 kHz.

6. Elektrophysikalisches Gerät **nach Anspruch 2,** bei dem der Wert der Schaltungsausgangsspannung zwischen 15 KV und 50 KV, aber am meisten bevorzugt zwischen 20 KV und 30 KV liegt.

7. Elektrophysikalisches Gerät **gemäß Anspruch 1,** wobei der Körper aus zwei symmetrischen Gehäusen besteht (Ref. 21 von **Fig. 2**), die als Träger und Isolierung für die sich kreuzenden Metallkanäle dienen (Ref. 20 von **Fig. 2**).

8. Elektrophysikalisches Gerät **gemäß Anspruch 1 gekennzeichnet durch** mehrere parallele Metallkanäle (Ref. 20 von **Fig. 2)** in variabler Form entlang ihrer Länge gemäß der Sequenz konvergent - gerade - divergent - konvergent - gerade - divergent.

## Revendications

1. Appareil électro-physique travaillant à haute fréquence dans un circuit haute tension (réf. 3 sur la **Fig. 1**) ayant la capacité de réaliser une ionisation et une activation de l'azote moléculaire pour obtenir de l'azote N* qui réagit sélectivement avec l'oxyde nitrique NO contenue dans les échappements du moteur, le transformant en dioxyde d'azote ou NO₂ selon la formule :
**N* + 2NO → NO₂ + N₂**
l'appareil comprenant un corps isolant en céramique (réf. 21 sur la **Fig.2**), à l'intérieur refermant plusieurs conduits métalliques parallèles (réf. 20 sur la **Fig.2)** : dans chaque conduit, un fil électrique a été placé (réf. 24 sur la **Fig. 2**) ; chaque conduit métallique parallèle comporte deux segments constitués de tubes ferromagnétiques droits (réf. 23 sur la **Fig.3)** entourés d'anneaux magnétiques (réf. 25 de la **Fig. 2**) ; en amont de chaque segment droit se trouve un segment de forme conique convergent ; dans chaque segment de forme conique convergente (réf. 27 et réf. 28 de la **Fig.2)** de conduits métalliques, un dispositif (réf. 22 sur la **Fig. 2** et sur la **Fig. 3**) qui convertit le flux d'échappement de laminaire à turbulent par un mouvement tourbillonnant **Ω**, est installé.

2. Appareil électro-physique **selon l'argument 1,** qui comprend un circuit inductif capacitif résonnant à haute fréquence avec des valeurs croissantes du premier étage d'inductance mutuelle au deuxième étage d'inductance mutuelle pour alimenter l'appareil.

3. Appareil électro-physique **selon l'argument 2 caractérisé par** l'adoption d'un générateur de courant alternatif multipolaire monophasé (réf. 9 sur la **Fig. 1**) avec vitesse de rotation variable entre 800 et 5 000 tr/min pour alimenter le circuit capacitif inductif.

4. Appareil électro-physique **selon l'argument 3** qui comprend un système de contrôle de position (réf. 8 sur la **Fig. 1**) qui mesure, commande et gère en synchronisme avec le générateur et fait varier continuellement le courant d'excitation en fonction de la vitesse de rotation.

5. Appareil électro-physique **selon l'argument 3** dans lequel la valeur opérationnelle de la fréquence du générateur de courant est dans la plage de 10 kHz à 1000 KHz, mais de préférence entre 80 kHz et 100 KHz.

6. Appareil électro-physique **selon l'argument 2** dans lequel la valeur de la tension de sortie du circuit est comprise entre 15KV et 50KV, mais de manière préférée entre toutes entre 20 KV et 30 KV.

7. Appareil électro-physique **selon l'argument 1** dans lequel le corps est composé de deux boîtiers symétriques (réf. 21 sur la **Fig.2)** servant de supports et d'isolation pour les conduits métalliques traversants (réf. 20 sur la **Fig.2).**

8. Appareil électro-physique **selon l'argument 1 caractérisé par** de multiples conduits métalliques parallèles (réf. 20 sur la **Fig. 2)** de forme variable sur leur longueur selon la séquence convergente - droite - divergente - convergente - droite - divergente.
